# EUROPÄISCHE PATENTSCHRIFT

(11) **EP 3 132 840 B1**
(45) Veröffentlichungstag und Bekanntmachung des Hinweises auf die Patenterteilung: **19.02.2020**
(21) Anmeldenummer: 15181563.6
(22) Anmeldetag: 19.08.2015
(51) Int. Cl.: B01D 53/18, C10L 3/10

(54) **VERFAHREN UND VORRICHTUNG ZUR ABTRENNUNG VON GASFÖRMIGEN SCHADSTOFFEN AUS EINEM GASSTROM**
METHOD AND DEVICE FOR THE SEPARATION OF GASEOUS POLLUTANTS FROM A GAS FLOW
PROCÉDÉ ET DISPOSITIF DE SÉPARATION DE SUBSTANCES TOXIQUES GAZEUSES D'UN FLUX GAZEUX

(43) Veröffentlichungstag der Anmeldung: 22.02.2017
(73) Patentinhaber: Siemens Aktiengesellschaft, 80333 München (DE)
(72) Erfinder: Häfner, Benjamin, 63505 Langenselbold (DE); Kursawe, Ansgar, 65527 Niedernhausen (DE); Reichl, Albert, 65812 Bad Soden (DE); Schliepdiek, Torsten, 65929 Frankfurt am Main (DE)

(56) Entgegenhaltungen:
- EP-A1- 1 594 592
- WO-A1-2014/177295
- DE-A1-102011 108 749
- US-A1- 2005 000 360
- US-A1- 2010 003 177
- US-A1- 2013 055 756

## Beschreibung

Die Erfindung betrifft ein Verfahren zur Abtrennung von gasförmigen Schadstoffen aus einem Gasstrom. Weiterhin betrifft die Erfindung eine Vorrichtung zur Abtrennung von gasförmigen Schadstoffen aus einem Gasstrom.

Vor dem Hintergrund der klimatischen Veränderungen ist es ein globales Ziel, die Emission von Schadstoffen in die Atmosphäre zu verringern. Dies gilt insbesondere für die Emission von Kohlendioxid (CO₂), welches sich in der Atmosphäre ansammelt, die Wärmeabstrahlung der Erde behindert und so als Treibhauseffekt zu einer Erhöhung der Erdoberflächentemperatur führt.

Aufgrund des niedrigen Ausstoßes von Kohlendioxid (CO₂) und einer geringen Emission von Abfallprodukten bei der Verbrennung wird immer häufiger Erdgas als ein fossiler Brennstoff eingesetzt. Sein Beitrag als eine der wichtigsten Energieressourcen der Welt steigt stetig an. Vor dem Hintergrund der Rohstoffverknappung, des dauerhaft steigenden Energiebedarfs und aus Gründen des Umweltschutzes stellt die Aufbereitung und Nutzung von Erdgas somit eine vielversprechende Möglichkeit zur effizienten und emissionsarmen Erzeugung von Energie dar.

Die direkte Nutzung von Roh-Erdgas ist jedoch bisweilen nur bedingt möglich. Aufgrund im Erdgas enthaltener saurer Schadstoffe, wie insbesondere Schwefelwasserstoff (H₂S), kann Roh-Erdgas häufig nicht direkt in einer Gasturbine verbrannt oder zum Pipelinetransport genutzt werden. Daher werden Erdgasströme mit einem hohen H₂S-Anteil häufig ungenutzt abgefackelt.

Entsprechend wird versucht, Erdgas vor der Verbrennung mittels verschiedener Abscheidetechniken aufzubereiten. Hierzu werden physikalische oder chemische Absorptions- bzw. Waschmedien eingesetzt, um die für eine weitere Verwendung des Erdgases geforderten Reinheiten zu gewährleisten. Bei solchen Verfahren werden insbesondere die im Roh-Erdgasstrom enthaltenen Anteile an Schwefelwasserstoff abgetrennt und das Erdgas so für eine anschließende Verbrennung aufbereitet.

Bei der Verbrennung eines Erdgases entsteht typischerweise ein kohlendioxidhaltiges Abgas bzw. Rauchgas. Zur Vermeidung bzw. zur Verringerung unerwünschter Kohlendioxid-Emissionen muss das Kohlendioxid aus dem Rauchgas abgetrennt werden, wozu entsprechend geeignete Maßnahmen diskutiert werden (Post-Combustion-Capture).

Als eine technische Realisierung wird hierzu im Rauchgas enthaltenes Kohlendioxid nach der Verbrennung durch einen Absorptions-Desorptions-Prozess mittels eines Absorptionsmediums aus dem jeweiligen Gasstrom herausgewaschen. Zur Abscheidung wird das Rauchgas einem Absorber zugeführt, wobei im Rauchgas enthaltenes gasförmiges Kohlendioxid im Absorptionsmedium gelöst bzw. in chemischem Sinne absorbiert wird. Das von Kohlendioxid befreite Abgas wird schließlich in die Atmosphäre entlassen. Das mit Kohlendioxid befrachtete Absorptionsmedium kann durch Desorption des absorbierten Kohlendioxids regeneriert und erneut zur Absorption von Kohlendioxid aus dem Rauchgas genutzt werden.

Bei der Absorption einer gasförmigen Komponente (Absorbat) in einem eingesetzten Absorptionsmedium (Absorbens) wird Energie in Form von Absorptionsenthalpie freigesetzt. Da die Enthalpie massenabhängig ist, tritt bei hohen Absorbatmassenanteilen, also vorliegend bei hohen Mengen an im Gasstrom enthaltenen Schadstoffen, eine entsprechend hohe Absorptionsenthalpieflussdichte innerhalb des Absorbers auf. Da der Absorptionsprozess üblicherweise eher bei geringen Temperaturen abläuft, wirkt sich eine mit der Freisetzung der Absorptionsenthalpie bedingte Temperaturerhöhung ungünstig auf das chemische Gleichgewicht im Absorptionsprozess aus. Durch die erhöhte Absorptionstemperatur wird der erzielbare Reaktionsfortschritt der Absorption verringert, was sich letztendlich ungünstig auf die Energiebilanz des Gesamtprozesses auswirkt.

US 2010/003177 A1, EP 1 594 592 A1, US 2005/000360 A1, US 2013/055756 A1, DE 10 2011 108749 A1 und WO 2014/177295 A1 beschreiben herkömmliche Absorptionsanlagen mit Wärmemanagement in Kombination mit Desorptionsanlagen.

Der Erfindung liegt als eine erste Aufgabe zugrunde, ein Verfahren anzugeben, mittels welchem die Energiebilanz bei der Abtrennung gasförmiger Schadstoffe aus einem Gasstrom einfach und effizient verbessert werden kann.

Als eine zweite Aufgabe liegt der Erfindung zugrunde, eine Vorrichtung anzugeben, die sich zur Durchführung eines entsprechenden Verfahrens eignet.

Die erste Aufgabe der Erfindung wird erfindungsgemäß gelöst durch ein Verfahren zur Abtrennung von gasförmigen Schadstoffen aus einem Gasstrom gemäß Anspruch 1.

In einem ersten Schritt geht die Erfindung von der Tatsache aus, dass zur Schaffung der für den Absorptionsprozess vorteilhaften Temperaturen eine Kühlung notwendig ist. Entsprechend wird der Einsatz einer zusätzlichen Kühleinheit notwendig, um der unerwünschten Erwärmung entgegenzuwirken.

In einem zweiten Schritt berücksichtigt die Erfindung, dass bei einer ganzheitlichen Betrachtung des Abscheideprozesses zusätzlich zur Absorption insbesondere auch der Desorptionsprozess berücksichtigt werden muss. Der Desorptionsprozess erfordert aufgrund der zur Freisetzung bzw. zur Abtrennung von im Absorptionsmedium absorbierten Komponenten benötigten Energie den Hauptenergiebedarf des Abscheideprozesses und stellt damit einen hohen Kostenfaktor dar. Eine Verringerung der Desorptionsenergie ist nur auf Kosten der Desorptionsrate möglich und stellt somit keine Option dar.

Unter Berücksichtigung der vorbeschriebenen Aspekte erkennt die Erfindung nun in einem dritten Schritt, dass durch eine gezielte wärmetechnische Kopplung von Absorptionsprozess und Desorptionsprozess die vorbenannten Probleme behoben werden können. Durch eine Kühlung zumindest eines Teilstroms des Absorptionsmediums und durch ein Bereitstellung der bei der Kühlung abgeführten Wärme für den Desorptionsprozess lassen sich gleichzeitig sowohl der Absorptionsprozess als auch der Desorptionsprozess verbessern.

Einerseits wird das Absorptionsmedium gezielt gekühlt und so dessen Temperatur innerhalb des Absorbers verringert. Auf diese Weise wird eine Prozessintensivierung bei der Absorption von Schadstoffen aus einem entsprechenden Gasstrom erreicht. Andererseits wird durch die Wärmeübertragung auf das Absorptionsmedium, also durch die Einspeisung der bei der Kühlung des Absorptionsmediums abgeführten Wärme in den Prozess, die Temperatur des in den Desorber eintretenden Absorptionsmediums erhöht. Hierdurch wird eine deutliche Reduktion des Energieverbrauchs im Desorber erzielt, was wiederum zu einer signifikanten Einsparung von Energiekosten im Prozess führt, die einen Großteil der Gesamtkosten des Abscheideprozesses ausmachen.

Mit anderen Worten ermöglicht das Verfahren durch die gezielte Kühlung des Absorptionsmediums auf der Absorberseite eine Übertragung von Wärmeenergie, die auf der Desorberseite wieder in den Prozess eingespeist wird.

Der Teilstrom des Absorptionsmediums wird dem Absorber vorzugsweise an einer Stelle entnommen, an welcher die Temperatur besonders hoch ist. Hierzu wird insbesondere der Bereich innerhalb des Absorbers genutzt, an dem das Temperaturprofil innerhalb des Absorbers einen sogenannten "Temperaturbauch" aufweist. Ein solcher Temperaturbauch entsteht durch die im Absorber vorherrschenden Temperaturdifferenzen.

Zum einen erhöht sich durch die Absorption der Schadstoffe im Absorptionsmedium die Temperatur innerhalb des Absorbers, wobei die Temperaturerhöhung abhängig von der Menge der absorbierten Schadstoffe ist. Zum anderen sorgt der bei relativ geringer Temperatur zugeführte Gasstrom für die Kühlung des Absorptionsmediums im Bereich des Bodens des Absorbers. Aufgrund dieser gegenläufigen Effekte entsteht der Temperaturbauch in der Kolonnenmitte. Die Ausprägung des Temperaturbauchs hängt hierbei von der Menge der absorbierten Schadstoffe ab.

Die bei der Kühlung abgeführte Wärme wird mittels einer Wärmepumpe auf das beladene Absorptionsmedium übertragen. Grundsätzlich entzieht eine Wärmepumpe als Teil eines Wärmeübertragungssystems einer Wärmequelle Wärme und kühlt die Wärmequelle somit ab. Die Wärmepumpe ermöglicht eine Übertragung der Wärmeenergie auf einen Wärmeempfänger.

Als Wärmequelle dient vorliegend das in der Kühleinheit eingesetzte Kühlmedium, das dem Absorptionsmedium im Rahmen der Kühlung Wärme entzieht und sich entsprechend erwärmt. Die bei der Kühlung freigesetzte und abgeführte Wärme wird auf ein Fluid (Wärmeübertragermedium) übertragen, mittels welchem die eingesetzte Wärmepumpe betrieben wird. Eine Wärmepumpe weist einen geschlossenen Wärmepumpenkreislauf auf, der einen einem Verdampfer zur isothermen Expansion des Fluids, eine Verdichter zur adiabatischen Kompression des Fluids, eine Verflüssiger zur isothermen Kompression des Fluids und ein Expansionsventil zur adiabatischen Expansion umfasst.

Durch die Wärmeaufnahme verdampft das Fluid. Das Volumen des Fluids steigt, wohingegen die Temperatur konstant bleibt. Der Verdichter saugt nun das gasförmige Fluid an und komprimiert es. Hierbei wird das Volumen unter Temperatur- und Druckerhöhung verringert. Das heiße gasförmige Fluid gelangt nun in den Verflüssiger und kondensiert dort. Die hierbei frei werdende Wärme wird auf das aus dem Absorber ausströmende beladene Absorptionsmedium übertragen. Das Fluid wird durch Druckverminderung über das Expansionsventil wieder abgekühlt und verflüssigt und kann erneut zur Wärmaufnahme von dem Kühlmedium genutzt werden. Mit anderen Worten erfolgt die Wärmeübertragung durch das in der Wärmepumpe zirkulierende Fluid vorzugsweise unter wechselnder Expansion und Kompression des Fluids.

In der Wärmepumpe wird das Kreislaufmedium, also das zirkulierende Fluid so gewählt, dass die Temperaturen des Phasenübergangs flüssig-gasförmig einen für die Wärmeübertragung ausreichenden Abstand zu den Temperaturen der Wärmequelle, also dem Absorptionsmedium innerhalb des Absorbers, und der Wärmesenke bzw. dem Wärmeempfänger, also dem beladenen Absorptionsmedium in der Abführleitung des Absorbers, haben. Da die durch die Wärmepumpe zu überbrückende Temperaturdifferenz relativ klein ist, lassen sich bei Einsatz einer gängigen Wärmepumpe mit hoher Leistungszahl die Kosten für Anschaffung und Betrieb durch die Einsparung an thermischer Energie überkompensieren.

Innerhalb des Desorbers werden die im Absorptionsmedium absorbierten Schadstoffe wieder desorbiert. Aufgrund der Wärmeenergieabgabe der Wärmepumpe an das Absorptionsmedium vor dem Eintritt in den Desorber kann die externe Energiezufuhr für den Desorptionsprozess deutlich reduziert werden. Das vom Desorber abfließende Absorptionsmedium wird vorzugsweise in den Absorber zurückgeführt. Dort kann es zu erneuten Absorption von Schadstoffen aus einem Gasstrom genutzt werden.

Zweckmäßigerweise wird das vom Desorber abfließende Absorptionsmedium vor dem Eintritt in den Absorber abgekühlt. Die Abkühlung erfolgt vorzugsweise mittels eines Wärmetauschers. Der Wärmetauscher ist hierbei vorzugsweise in der Abführleitung des Absorbers angeordnet. Innerhalb des Wärmetauschers wird die Wärme des von dem Desorber zum Absorber strömenden, regenerierten Absorptionsmediums auf vom Absorber dem Desorber zugeführtes, beladenes Absorptionsmedium übertragen. Der Wärmetauscher nutzt somit die Abwärme des Desorbers, um das Waschmedium aus dem Absorber vor dem Eintritt in den Desorber vorzuwärmen. Gleichzeitig wird das regenerierte Absorptionsmedium vor dem Eintritt in den Absorber gekühlt.

Ein Teilstrom des aus dem Absorber abfließenden Absorptionsmediums dem Desorber ohne Vorwärmung zugeführt wird. Eine solche Abtrennung eines Teilstroms wird als Split-Feed-Verfahren bezeichnet. Durch die Zufuhr des Teilstroms in den Absorber erfolgt vorzugsweise im Bereich des Kopfes des Desorbers.

Der Teilstrom des beladenen Absorptionsmediums wird vorzugsweise über eine separate Leitung, eine Abzweigleitung, abgeführt. Hierbei erfolgt die Abfuhr des Teilstroms vor der Wärmeübertragung auf das beladene Absorptionsmedium. Die Leitung zum Abziehen des Teilstroms ist also in Strömungsrichtung des beladenen Absorptionsmediums vor dem Wärmeübertrager angeordnet. Auch erfolgt die Entnahme des Teilstroms vor dem Passieren des Wärmetauschers, der zum Wärmeaustausch zwischen dem von dem Desorber zum Absorber strömenden, regenerierten Absorptionsmedium und dem vom Absorber dem Desorber zugeführten, beladene Absorptionsmediums eingesetzt ist.

Mit anderen Worten wird die bei der Kühlung des Absorptionsmediums abgeführte Wärme erst nach Abzug des Teilstroms auf das beladene Absorptionsmedium übertragen.

Zweckmäßigerweise wird aus dem Desorber abfließendes Absorptionsmedium einem Reboiler zugeführt. Der Reboiler liefert als ein sogenannter Sumpfverdampfer die notwendige Regenerationswärme für die Trennung der absorbierten Schadstoffe vom Absorptionsmedium. Das beladene Absorptionsmedium wird hierbei durch Dampf, welcher im Reboiler erzeugt wird, regeneriert. Zur Erzeugung des Dampfes innerhalb des Reboilers wird dieser üblicherweise mit importiertem Dampf, beispielsweise aus einem angeschlossenen Dampfkraftwerk, beheizt.

Besonders bevorzugt wird als Absorptionsmedium eine Aminosäuresalzlösung eingesetzt. Eine wässrige Aminosäuresalzlösung ist hierbei zweckmäßig. Aminosäuresalze eigenen sich insbesondere aufgrund ihres kaum merklichen Dampfdrucks, der einen Austrag in die Atmosphäre verhindert. Ein bevorzugtes Aminosäuresalz ist ein Salz eines Metalls, insbesondere eines Alkalimetalls. Auch können Mischungen verschiedener Aminosäuresalze als Aktivkomponente des Absorptionsmediums eingesetzt werden.

In einer besonders vorteilhaften Ausgestaltung werden als Schadstoffe Kohlendioxid und/oder Schwefelwasserstoff aus dem Gasstrom abgetrennt. Mit anderen Worten eignet sich das Verfahren sowohl zur Abtrennung von Schwefelwasserstoff aus einem Erdgas vor der Verbrennung des Erdgases, als auch zur Abscheidung von Kohlendioxid aus einem bei der Verbrennung entstehenden Abgas bzw. Rauchgas.

Die zweite Aufgabe der Erfindung wird erfindungsgemäß gelöst durch eine Vorrichtung zur Abtrennung von gasförmigen Schadstoffen aus einem Gasstrom gemäß Anspruch 7.

Durch eine solche wärmetechnische Kopplung kann die in der Kühleinheit übertragene Wärme als Energie abgeführt werden.

Die Übertragung erfolgt hierbei im Rahmen des Abscheideprozesses auf den aus dem Absorber ausströmenden mit Schadstoffen beladenen Absorptionsmedium.

Der Einsatz einer solchen Vorrichtung ermöglicht somit einerseits eine Prozessintensivierung bei der Absorption der Schadstoffe im Absorptionsmedium. Andererseits kann die Energiebilanz des Abscheideprozesses insgesamt verbessert werden, da die zur Desorption der Schadstoffe benötigte Wärme im Rahmen der Kühlung des Absorptionsmediums im Abscheideprozess bzw. innerhalb der Vorrichtung übertragen wird.

Zur Übertragung der bei der Kühlung abgeführten Wärme auf das beladene Absorptionsmedium wird eine Wärmepumpe eingesetzt. Mittels der Wärmepumpe wird dem Absorptionsmedium mittels eines eingesetzten Wärmeübertragermediums Wärme entzogen, und dann auf die Abführleitung des Absorbers und auf das in der Abführleitung strömende Absorptionsmedium übertragen. Das durch Wärmeaufnahme und zuvor erhitzte Wärmeübertragermedium kühlt hierbei wieder ab und kann erneut zur Kühlung des Absorptionsmediums und zur Wärmegewinnung aus dem Absorptionsmedium genutzt werden.

Der Absorber ist über seine Abführleitung strömungstechnisch mit einer ersten Zuführleitung des Desorbers verbunden. So kann das in dem Absorber mit Kohlendioxid beladene Absorptionsmedium zur Freisetzung des Kohlendioxids dem Desorber zugeführt werden. Zur Rückführung des im Desorber regenerierten Absorptionsmediums ist der Desorber zweckmäßigerweise über eine Abführleitung strömungstechnisch mit einer Zuführleitung des Absorbers verbunden. Das in dem Desorber regenerierte Absorptionsmedium kann über die strömungstechnische Verbindung der Leitungen und damit der jeweiligen Anlagenkomponenten in den Absorber zurückgeführt und dort im weiteren Prozess zur erneuten Absorption von im Gasstrom enthaltenen Schadstoffen genutzt werden.

Weiter ist ein Wärmetauscher umfasst, über den die Abführleitung des Absorbers und die Rückführleitung des Desorbers wärmetechnisch miteinander gekoppelt sind. In dem Wärmetauscher wird das vom Desorber zum Absorber strömende Absorptionsmedium gekühlt und überträgt dabei Wärme auf das beladene Absorptionsmedium. Der Wärmetauscher nutzt somit die Abwärme in der Rückführleitung des Desorbers, um das Absorptionsmedium vor dem Eintritt in den Desorber vorzuwärmen. Diese Vorwärmung erfolgt bevorzugt zusätzlich zu der Wärmeübertragung durch die Wärmepumpe.

Erfindungsgemäß ist der Abführleitung des Absorbers eine Abzweigleitung zur Entnahme eines Teilstroms des Absorptionsmediums angeschlossen, die strömungstechnisch mit einer Zuführleitung des Desorbers verbunden ist. Das aus dem Absorber entnommene Absorptionsmedium wird somit im Rahmen des sogenannten Split-Feed-Verfahrens in zumindest zwei Teilströme aufgeteilt. Über die strömungstechnische Verbindung der Abzweigleitung mit der Zuführleitung des Desorbers wird ein erster Teilstrom des Gesamtstroms des Absorptionsmediums vorzugsweise im Bereich des Kopfes dem Desorbers zugeführt. Diese Zufuhr geschieht ohne Vorwärmung des ersten Teilstroms.

Erfindungsgemäß ist die Kühleinheit derart wärmetechnisch mit der Abführleitung gekoppelt, dass die Übertragung der Wärme auf das beladene Absorptionsmedium nach Entnahme des Teilstroms erfolgt.

So steht die gesamte bei der Wärmeübertragung auf das Absorptionsmedium übertragene Wärme zur Desorption zur Verfügung und wird nicht unerwünschterweise mit dem aus dem Absorptionsmedium abgezogenen Teilstrom dem Desorber zugeführt.

Der zweite Teilstrom des Gesamtstroms, also der nach der Abtrennung des ersten Teilstrom in der Abführleitung des Absorbers verbleibende Teilstrom an Absorptionsmedium wird dem Desorber zweckmäßigerweise im Bereich des Bodens bzw. im unteren Drittel des Desorbers zugeführt. Die Zufuhr des zweiten Teilstroms erfolgt vorgewärmt. Die dem Desorber durch den vorgewärmten Teilstrom zugeführte Wärme ermöglicht eine Verringerung der zur Desorption extern in den Prozess eingebrachten thermischen Energie. Die Vorwärmung erfolgt hierbei sowohl ausgehend von Absorber durch die von dem Absorptionsmedium übertragene Wärme, als auch durch den Wärmetausch zwischen dem vom Desorber zurückfließenden, regenerierten Absorptionsmedium und dem aus dem Absorber abfließenden beladenen Absorptionsmedium.

Dem Desorber ist zweckmäßigerweise ein Reboiler angeschlossen, der die notwendige Regenerationswärme für die Trennung der absorbierten Schadstoffe vom Absorptionsmedium bereitstellt.

Vorzugsweise ist als Absorptionsmedium eine Aminosäuresalzlösung eingesetzt, wobei insbesondere eine wässrige Aminosäuresalzlösung bevorzugt ist.

Besonders bevorzugt ist die Vorrichtung zur Abtrennung von Kohlendioxid und/oder Schwefelwasserstoff als Schadstoffen aus dem Gasstrom eingerichtet und ausgebildet. Alle Vorrichtungskomponenten eignen sich sowohl zur Abtrennung von Schwefelwasserstoff aus einem Erdgas vor der Verbrennung des Erdgases, als auch zur Abscheidung von Kohlendioxid aus einem bei der Verbrennung entstehenden Abgases bzw. Rauchgases.

Die zu bevorzugten Ausgestaltungen des Verfahrens genannten Vorteile können sinngemäß auf entsprechende Ausgestaltungen der Vorrichtung übertragen werden.

Im Folgenden wird ein Ausführungsbeispiel der Erfindung anhand einer Zeichnung näher erläutert.

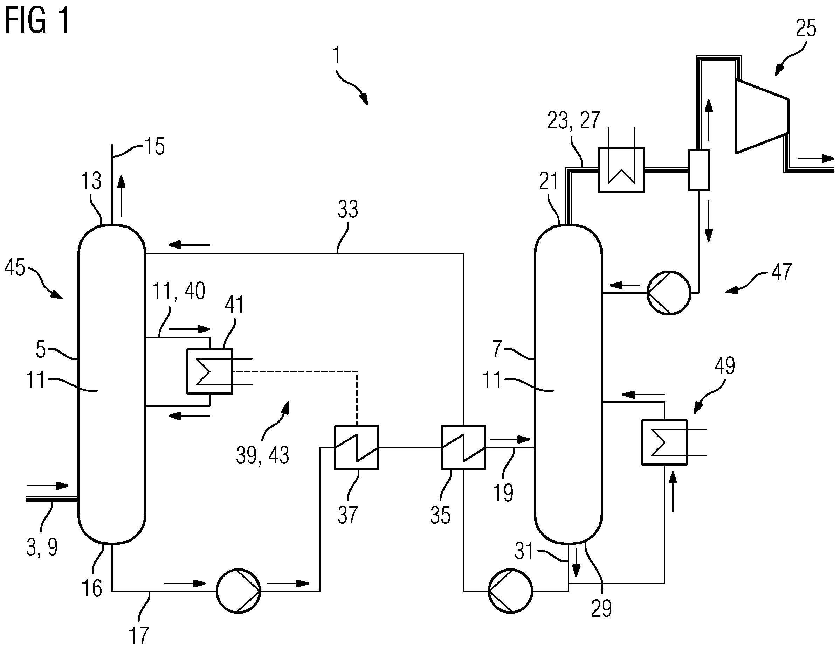

FIG 1 zeigt eine Vorrichtung 1 zur Abtrennung von gasförmigen Schadstoffen aus einem Gasstrom 3. Die Vorrichtung 1 umfasst einen Absorber 5 und einen strömungstechnisch mit dem Absorber 5 gekoppelten Desorber 7.

Die gezeigte Vorrichtung 1 eignet sich hierbei grundsätzlich sowohl zur Abtrennung von Schwefelwasserstoff aus einem Erdgas vor der Verbrennung des Erdgases, als auch zur Abscheidung von Kohlendioxid aus einem bei der Verbrennung entstehenden Abgases bzw. Rauchgases. Im Folgenden wird exemplarisch die Aufreinigung eines Rauchgasstromes 3 beschrieben.

Der bei der Verbrennung eines Brennstoffs, wie beispielsweise eines Erdgasstromes, entstehende Rauchgasstrom 3 wird über eine Zuführleitung 9 dem Absorber 5 zugeführt. Innerhalb des Absorbers 5 wird der Gasstrom 3 mit einem Absorptionsmedium 11 in Kontakt gebracht. Als Absorptionsmedium 11 ist vorliegend eine wässrige Aminosäuresalzlösung eingesetzt.

Das im Rauchgas 3 als Schadstoff enthaltene Kohlendioxid wird in dem Absorptionsmedium 11 absorbiert. Der hierbei von Kohlendioxid befreite Gasstrom 3 wird dann über eine dem Kopf 13 des Absorbers 5 angeschlossene Abzugsleitung 15 in die Atmosphäre entlassen.

Das mit Kohlendioxid beladene Absorptionsmedium 11 wird über eine dem Boden 16 des Absorber 5 angeschlossene Abführleitung 17 dem Desorber 7 zugeführt. Hierzu ist die Abführleitung 17 des Absorbers 5 strömungstechnisch mit einer Zuführleitung 19 des Desorbers 7 gekoppelt. Innerhalb des Desorbers 7 wird das im Absorptionsmedium 11 absorbierte Kohlendioxid durch thermische Desorption freigesetzt und am Kopf 21 des Desorbers 7 abgezogen. Zur Aufbereitung und Überführung des Kohlendioxids ist dem Desorber 7 hier eine Abzugsleitung 23 angeschlossen, die zu einer nicht näher spezifizierten Aufbereitungseinrichtung 25 führt. In der Aufbereitungseinrichtung 25 kann der desorbierte CO₂-reiche Gasstrom 27 verdichtet und anschließend beispielsweise zu einer Speicherstätte transportiert werden.

Das von Kohlendioxid befreite Absorptionsmedium 11 sammelt sich im Sumpf am Boden 29 des Desorbers 7. Von hier aus wird es wieder in den Absorber 5 zurückgeführt. Dem Desorber 7 ist entsprechend eine Rückführleitung 31 angeschlossen, die strömungstechnisch mit einer Zuführleitung 33 des Absorbers 5 verbunden ist. Das in dem Desorber 7 regenerierte Absorptionsmedium 11 steht dort zu erneuten Absorption von Kohlendioxid aus dem Rauchgas 3 zu Verfügung.

Sowohl das aus dem Absorber 5 ausströmende beladene Absorptionsmedium 11, als auch das aus dem Desorber 7 ausströmende regenerierte Absorptionsmedium 11 passierenden gleichen Wärmetauscher 35. Die Abführleitung 17 des Absorbers 5 und die Rückführleitung 31 des Desorbers 7 sind über den Wärmetauscher 35 wärmetechnisch miteinander gekoppelt.

Innerhalb des Wärmetauschers 35 wird die Wärme des von dem Desorber 7 zum Absorber 5 strömenden, regenerierten Absorptionsmedium 11 auf das vom Absorber 5 dem Desorber 7 zugeführte, beladene Absorptionsmedium 11 übertragen. Der Wärmetauscher 35 nutzt somit die Abwärme des Desorbers 7, um das Absorptionsmedium 11 vor dem Eintritt in den Desorber 7 vorzuwärmen.

Zusätzlich zu dem Wärmetauscher 35 ist in der Abführleitung 17 des Absorbers 5 ein zweiter Wärmetauscher 37 angeordnet. Dieser Wärmetauscher 37 ist Teil eines Wärmeübertragungssystems 39. Mittels des Wärmetauschers 37 wird das aus dem Absorber 5 austretende, mit Kohlendioxid beladene Absorptionsmedium 11 bereits vor dem Durchtritt durch den ersten Wärmetauscher 35 erwärmt. Die Übertragung der Wärme erfolgt ausgehend von einer Kühleinheit 41.

Diese Kühleinheit 41 ist ebenfalls Teils des Wärmeübertragungssystems 39 und dem Absorber 5 angeschlossen. Die Kühleinheit 41 dient der Entnahme, Zwischenkühlung und Rückführung von im Absorber 5 strömendem Absorptionsmedium 11. Hierzu wird dem Absorber 5 ein Teilstrom 40 des Absorptionsmediums 11 entnommen, der dann in die Kühleinheit 41 strömt und dort entsprechend gekühlt wird. Nach der Kühlung wird der (Teil-)Strom 40 wieder dem Absorber 5 wieder zugeführt.

In der Kühleinheit 41 zirkuliert ein Kühlmedium, das die Wärme aus dem Absorptionsmedium 11 aufnimmt und dieses auf ein in einer Wärmepumpe 43 als Teil des Wärmeübertragungssystems 39 zirkulierendes Fluid (Wärmeübertragermedium) überträgt. Die Wärmepumpe weist einen geschlossenen Wärmepumpenkreislauf auf, dessen einzelne Komponenten (Verdampfer, Verdichter, Verflüssiger, Expansionsventil) vorliegend nicht näher gezeigt sind.

Das Fluid wird bei niedrigem Druck unter Wärmezufuhr durch die in der Kühleinheit 41 gewonnene Wärme verdampft, anschließend komprimiert und nach der Verdichtung auf einen höheren Druck unter Wärmeabgabe wieder kondensiert. Die hierbei freiwerdende Wärme wird hierbei über den Wärmetauscher 37 an das in der Abführleitung 17 des Absorbers 5 strömende Absorptionsmedium 11 übertragen.

Durch den Einsatz der Kühleinheit 41 wird eine gezielte Kühlung des Absorptionsmediums 11 auf Absorberseite 45 erreicht und so die Absorptionsbedingungen innerhalb des Absorbers 7 gegenüber gängigen Absorbern deutlich verbessert.

Die bei der Kühlung des Absorptionsmediums 11 abgeführte Wärme kann dank des Wärmeübertragungssystems 39, anstatt einfach in die Umgebung abgeführt zu werden, auf das in der Abführleitung 17 des Absorbers 5 strömende Absorptionsmedium 11 übertragen werden. Auf der Desorberseite 47 verringert sich hierdurch die extern zuzuführende Energiemenge, so dass der Energieverbrauch im Gesamtprozess, also bei der Abtrennung des Kohlendioxids aus dem Rauchgas 3, effektiv verringert wird.

Zur Bereitstellung der notwendigen Regenerationswärme für die Trennung des Kohlendioxids vom Absorptionsmedium 11 ist dem Desorber 7 ein Reboiler 49 angeschlossen. Das beladene Absorptionsmediums 11 wird hierbei durch Dampf, welcher im Reboiler 49 erzeugt wird, regeneriert. Der Reboiler 49 wird mit importiertem Dampf, beispielsweise aus einem angeschlossenen Dampfkraftwerk, beheizt, was vorliegend nicht gezeigt ist.

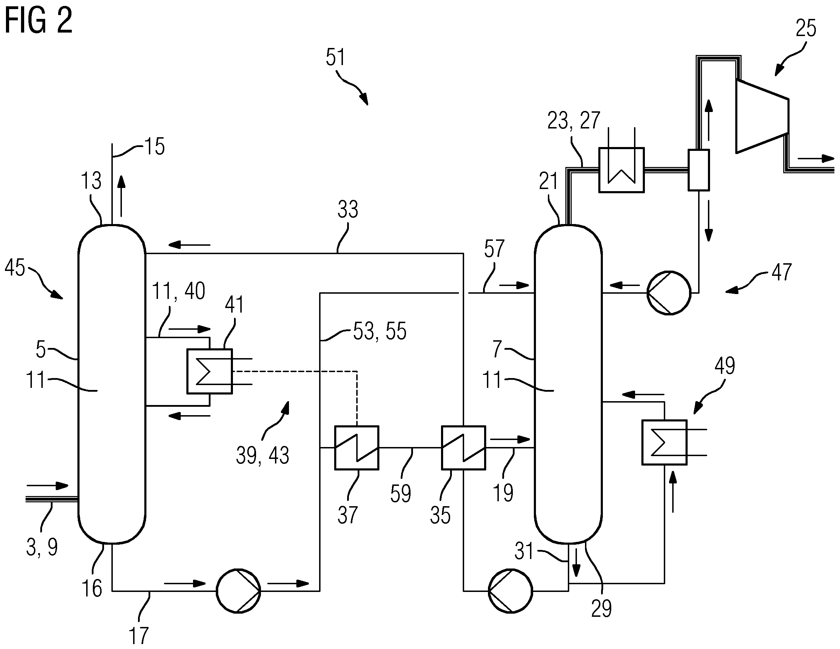

FIG 2 zeigt eine weitere Vorrichtung 51, die sich ebenfalls zur Abtrennung von gasförmigen Schadstoffen aus einem Gasstrom 3 eignet. Wie auch die Vorrichtung 1 umfasst die Vorrichtung 51 den Absorber 5, den strömungstechnisch mit dem Absorber 5 gekoppelten Desorber 7, sowie das zur Wärmeübertragung auf das eingesetzte Absorptionsmedium 11 genutzte Wärmeübertragungssystem 39 mit der Kühleinheit 41, der Wärmepumpe 43 und dem Wärmetauscher 37.

Der wesentliche Unterschied der Vorrichtung 51 zur Vorrichtung 1 gemäß FIG 1 liegt in der Behandlung des aus dem Absorber 5 austretenden, mit Kohlendioxid beladenen Absorptionsmediums 11.

Vorliegend wird von dem Absorptionsmedium 11 ein Teilstrom 53 abgezogen. Es handelt sich also um ein Split-Feed-Verfahren. Der Teilstrom 53 wird über eine der Abführleitung 17 des Absorbers 5 angeschlossene Abzweigleitung 55 ohne eine Vorwärmung in den Desorber geführt. Hierzu ist die Abzweigleitung 55 strömungstechnisch mit einer Zuführleitung 57 des Desorbers 7 verbunden.

Der restliche Strom 59 des Absorptionsmediums 11 wird dem Desorber 7 über die strömungstechnische Verbindung der Abführleitung 17 mit Zuführleitung 19 des Desorbers 7 zugeführt. Hierbei passiert der Strom ebenfalls die beiden Wärmetauscher 35, 37 und wird hierbei derart vorgewärmt, dass die Eintrittstemperatur am Eingang des Desorbers hoch ist. Durch diese Vorwärmung kann der extern eingespeiste thermische Energiebedarf weiter verringert und die Wirtschaftlichkeit des Abscheideprozesses entsprechend erhöht werden.

Hinsichtlich der weiteren Beschreibung der Vorrichtung 51 bzw. des mit dieser durchgeführten Verfahrens wird an dieser Stelle auf die detaillierte Beschreibung zur Vorrichtung 1 gemäß FIG 1 verwiesen.

## Patentansprüche

1. Verfahren zur Abtrennung von gasförmigen Schadstoffen aus einem Gasstrom (3), wobei ein Gasstrom (3) einem Absorber (5) zugeführt wird,
wobei die im Gasstrom (3) enthaltenen Schadstoffe mittels eines Absorptionsmediums (11) aus dem Gasstrom (3) abgetrennt werden, wobei zumindest ein Teilstrom (40) des mit Schadstoffen beladenen Absorptionsmedium (11) ausgehend vom Absorber (5) einer Kühleinheit (41) zugeführt wird, wobei der in der Kühleinheit (41) abgekühlte Teilstrom (40) in den Absorber (5) zurückgeführt wird,
**dadurch gekennzeichnet, dass**
dem Teilstrom (40) mittels einer Wärmepumpe (43) Wärme entzogen wird, wobei die bei der Kühlung freigesetzte und abgeführte Wärme auf ein Wärmeübertragermedium übertragen wird, mittels welchem die eingesetzte Wärmepumpe betrieben wird, sodass das Absorptionsmedium (11) unter Abfuhr von Wärme gekühlt wird,
und zur Freisetzung der Schadstoffe das mit Schadstoffen teilbeladene Absorptionsmedium (11) einem Desorber (7) zugeführt wird, wobei von dem Absorptionsmedium (11) ein Abführ-Teilstrom (53) abgezogen wird, der über eine Abzweigleitung (55) ohne eine Vorwärmung in den Desorber geführt wird, und der restliche Strom (59) des Absorptionsmediums (11) dem Desorber (7) über eine Zuführleitung (19) dem Desorbers (7) zugeführt wird, wobei in die Zuführleitung (19) ein Wärmetauscher (37) geschaltet ist, und Wärme aus dem Wärmeübertragermedium durch den Wärmetauscher (37) auf den restlichen Strom (59) übertragen wird.

2. Verfahren nach Anspruch 1, wobei vom Desorber (7) abfließendes Absorptionsmedium (11) in den Absorber (5) zurückgeführt wird.

3. Verfahren nach einem der vorhergehenden Ansprüche, wobei vom Desorber (7) abfließendes Absorptionsmedium (11) vor dem Eintritt in den Absorber (5) abgekühlt wird.

4. Verfahren nach einem der vorhergehenden Ansprüche, wobei aus dem Desorber (7) abfließendes Absorptionsmedium (11) einem Reboiler (49) zugeführt wird.

5. Verfahren nach einem der vorhergehenden Ansprüche, wobei als Absorptionsmedium (11) eine Aminosäuresalzlösung eingesetzt wird.

6. Verfahren nach einem der vorhergehenden Ansprüche, wobei als Schadstoffe Kohlendioxid und/oder Schwefelwasserstoff aus dem Gasstrom (3) abgetrennt werden.

7. Vorrichtung (51) zur Abtrennung von gasförmigen Schadstoffen aus einem Gasstrom (3), umfassend einen Absorber (5) zum Abscheiden der Schadstoffe aus dem Gasstrom (3) mittels eines Absorptionsmediums (11), sowie einen strömungstechnisch mit einer Abführleitung (17) des Absorbers (5) gekoppelten Desorber (7) zur Freisetzung der Schadstoffe aus dem Absorptionsmedium (11), wobei dem Absorber (5) eine Kühleinheit (41) zur Kühlung wenigstens eines Teilstroms (40) des Absorptionsmediums (11) unter Abfuhr von Wärme strömungstechnisch angeschlossen ist, wobei die Kühleinheit (41) über eine Seitenabzug und eine Seitenzuführleitung an den Absorber angeschlossen ist,
**dadurch gekennzeichnet, dass**
zur Übertragung der bei der Kühlung abgeführten Wärme auf das beladene Absorptionsmedium (11) eine Wärmepumpe (43) eingesetzt ist, und an der Abführleitung (17) des Absorbers (5) eine Abzweigleitung (55) zur Entnahme eines Abführ-Teilstroms (53) des Absorptionsmediums (11) angeschlossen ist, die strömungstechnisch mit einer Zuführleitung (57) des Desorbers (7) verbunden ist, und wobei die Kühleinheit (41) derart wärmetechnisch mit der Abführleitung (17) gekoppelt ist, dass die Übertragung der Wärme auf das beladene Absorptionsmedium (11) nach der Entnahme des Abführ-Teilstroms (53) erfolgt, und wobei der Desorber (7) über eine Rückführleitung (31) strömungstechnisch mit einer Zuführleitung (33) des Absorbers (5) verbunden ist, und wobei ein Wärmetauscher (35) umfasst ist, über den die Abführleitung (17) des Absorbers (5) und die Rückführleitung (31) des Desorbers (7) wärmetechnisch miteinander gekoppelt sind.

8. Vorrichtung (51) nach Anspruch 7, wobei dem Desorber (7) ein Reboiler (49) angeschlossen ist.

9. Vorrichtung (51) nach einem der Ansprüche 7 oder 8, wobei als Absorptionsmedium (11) eine Aminosäuresalzlösung eingesetzt ist.

10. Vorrichtung (51) nach einem der Ansprüche 7 bis 9, die zur Abtrennung von Kohlendioxid und/oder Schwefelwasserstoff als Schadstoffen aus dem Gasstrom (3) eingerichtet und ausgebildet ist.

## Claims

1. Method for removing gaseous pollutants from a gas stream (3), wherein a gas stream (3) is supplied to an absorber (5), wherein the pollutants present in the gas stream (3) are removed from the gas stream (3) by means of an absorption medium (11), wherein at least a substream (40) of the pollutant-laden absorption medium (11) coming from the absorber (5) is supplied to a cooling unit (41), wherein the substream (40) that has been cooled down in the cooling unit (41) is returned into the absorber (5),
**characterized in that**
heat is extracted from the substream (40) by means of a heat pump (43), wherein the heat that is released and removed during the cooling is transferred to a heat transfer medium via which the heat pump used is operated so that the absorption medium (11) is cooled with removal of heat,
and, for the release of the pollutants, the partially pollutant-laden absorption medium (11) is supplied to a desorber (7), wherein a withdrawal substream (53) is taken off from the absorption medium (11) and is led into the desorber via a branch line (55) without preheating, and the remaining stream (59) of the absorption medium (11) is supplied to the desorber (7) via a supply line (19) of the desorber (7), wherein a heat exchanger (37) is connected into the supply line (19), and heat is transferred by the heat exchanger (37) from the heat transfer medium to the remaining stream (59).

2. Method according to Claim 1, wherein absorption medium (11) flowing away from the desorber (7) is returned into the absorber (5).

3. Method according to either of the preceding claims, wherein absorption medium (11) flowing away from the desorber (7) is cooled down prior to entry into the absorber (5).

4. Method according to any of the preceding claims, wherein absorption medium (11) flowing away out of the desorber (7) is supplied to a reboiler (49).

5. Method according to any of the preceding claims, wherein the absorption medium (11) used is an amino acid salt solution.

6. Method according to any of the preceding claims, wherein the pollutants removed from the gas stream (3) are carbon dioxide and/or hydrogen sulfide.

7. Apparatus (51) for removing gaseous pollutants from a gas stream (3), comprising an absorber (5) for separating the pollutants from the gas stream (3) by means of an absorption medium (11) and also a desorber (7) which is coupled in terms of flow to a withdrawal line (17) of the absorber (5) and has the purpose of releasing the pollutants from the absorption medium (11), wherein a cooling unit (41) for cooling at least a substream (40) of the absorption medium (11) by removing heat is connected in terms of flow to the absorber (5), wherein the cooling unit (41) is connected to the absorber via a side draw and a side supply line,
**characterized in that**
a heat pump (43) is used for transferring the heat removed during the cooling to the laden absorption medium (11), and a branch line (55) for removing a withdrawal substream (53) of the absorption medium (11) is connected to the discharge line (17) of the absorber (5) and is connected in terms of flow to a supply line (57) of the desorber (7), and wherein the cooling unit (41) is thermally coupled to the discharge line (17) in such a way that the transfer of heat to the laden absorption medium (11) is effected after removing the withdrawal substream (53), and wherein the desorber (7) is connected in terms of flow to a supply line (33) of the absorber (5) via a return line (31), and wherein a heat exchanger (35) is included, via which the discharge line (17) of the absorber (5) and the return line (31) of the desorber (7) are thermally coupled to one another.

8. Apparatus (51) according to Claim 7, wherein a reboiler (49) is connected to the desorber (7).

9. Apparatus (51) according to either of Claims 7 and 8, wherein the absorption medium (11) used is an amino acid salt solution.

10. Apparatus (51) according to any of Claims 7 to 9, which is configured and designed to remove carbon dioxide and/or hydrogen sulfide from the gas stream (3) as pollutants.

## Revendications

1. Procédé de séparation de substances polluantes sous forme gazeuse d'un courant (3) gazeux, un courant (3) gazeux étant envoyé à un absorbeur (5),
dans lequel on sépare, du courant (3) gazeux, les substances polluantes contenues dans le courant (3) gazeux au moyen d'un fluide (11) d'absorption, au moins un courant (40) partiel du fluide (11) d'absorption chargé de substances polluantes étant envoyé de l'absorbeur (5) à une unité (41) de refroidissement, le courant (40) partiel refroidi dans l'unité (41) de refroidissement étant retourné à l'absorbeur (5),
**caractérisé en ce que**
on retire de la chaleur du courant (40) partiel au moyen d'une pompe à chaleur (43), la chaleur livérée lors du refroidissement et évacuée étant transmise à un fluide de transfert de chaleur, au moyen duquel la pompe à chaleur utilisée fonctionne de manière à refroidir le fluide (11) d'absorption avec évacuation de la chaleur,
et, pour libérer les substances polluantes, on envoie le fluide (11) d'absorption chargé en partie de substances polluantes à un désorbeur (7), un courant (53) partiel étant retiré du fluide (11) d'absorption et envoyé par un conduit (55) de dérivation sans préchauffage au désorbeur et le courant (59) restant du fluide (11) d'absorption étant envoyé au désorbeur (7) par un conduit (19) d'apport, dans lequel un échangeur de chaleur (37) est monté dans le conduit (19) d'apport et on transfère de la chaleur du fluide d'échange de chaleur au courant (59) restant par l'échangeur de chaleur (37).

2. Procédé suivant la revendication 1, dans lequel on retourne à l'absorbeur (5) du fluide (11) d'absorption sortant du désorbeur (7).

3. Procédé suivant l'une des revendications précédentes, dans lequel on refroidit du fluide (11) d'absorption sortant du désorbeur (7) avant l'entrée dans l'absorbeur (5).

4. Procédé suivant l'une des revendications précédentes, dans lequel on envoie à un rebouilleur (49) du fluide (11) d'absorption s'écoulant du désorbeur (7).

5. Procédé suivant l'une des revendications précédentes, dans lequel on utilise une solution de sel d'acide aminé comme fluide (11) d'absorption.

6. Procédé suivant l'une des revendications précédentes, dans lequel on sépare du courant (3) gazeux du dioxyde de carbone et/ou de l'hydrogène sulfuré comme substances polluantes.

7. Installation (51) de séparation de substances polluantes sous forme gazeuse d'un courant (3) gazeux, comprenant un absorbeur (5) pour séparer les substances polluantes du courant (3) gazeux au moyen d'un fluide (11) d'absorption, ainsi qu'un désorbeur (7) communiquant en technique d'écoulement avec un conduit (17) d'évacuation de l'absorbeur (5) pour libérer les substances polluantes du fluide (11) d'absorption, une unité (41) de refroidissement pour refroidir au moins un courant (40) partiel du fluide (11) d'absorption avec évacuation de la chaleur communiquant en technique d'écoulement avec l'absorbeur (5), l'unité (41) de refroidissement communiquant avec l'absorbeur par une évacuation latérale et par un conduit d'apport latéral,
**caractérisée en ce que**
pour transférer la chaleur, évacuée lors du refroidissement, au fluide (11) d'absorption chargé, une pompe à chaleur (43) est utilisée et au conduit (17) d'évacuation de l'absorbeur (5) est raccordé un conduit (55) de dérivation pour prélever un courant (53) partiel d'évacuation du fluide (11) d'absorption, conduit (55) de dérivation qui communique en technique d'écoulement avec un conduit (57) d'apport du désorbeur (7), et dans laquelle l'unité (41) de refroidissement est couplée en technique de chaleur au conduit (17) d'évacuation de manière à effectuer le transfert de la chaleur au fluide (11) d'absorption chargé après le prélèvement du courant (53) partiel d'évacuation et dans laquelle le désorbeur (7) communique en technique d'écoulement par un conduit (31) de retour avec un conduit (33) d'apport de l'absorbeur (5) et il y a un échangeur de chaleur (35), par lequel le conduit (17) d'évacuation de l'absorbeur (5) et le conduit (31) de retour du désorbeur (5) sont couplés l'un à l'autre en technique de la chaleur.

8. Installation (51) suivant la revendication 7, dans laquelle un rebouilleur (49) communique avec le désorbeur (7).

9. Installation (51) suivant l'une des revendications 7 ou 8, dans laquelle une solution de sel d'acide aminé est utilisée comme fluide (11) d'absorption.

10. Installation (51) suivant l'une des revendications 7 à 9, qui est conçue et constituée pour séparer du dioxyde de carbone et/ou de l'hydrogène sulfuré comme substances polluantes du courant (3) gazeux.
